# EUROPEAN PATENT SPECIFICATION

(11) **EP 4 101 555 B1**
(45) Date of publication and mention of the grant of the patent: **18.09.2024**
(21) Application number: 21844937.9
(22) Date of filing: 20.04.2021
(51) Int. Cl.: B21C 37/12, B21C 37/08, F16L 9/02, B23K 9/032, B21C 47/24

(54) **MOBILE HELICAL TUBING PLANT WITH STEEL SHEET COIL**
MOBILES WERK EINES STAHLBLECHSPIRALROHRS
FABRIQUE ITINÉRANTE DE TUBE HÉLICOÏDAL À PARTIR D'UNE BOBINE DE PLAQUE D'ACIER

(43) Date of publication of application: 14.12.2022
(73) Proprietor: MEMPS-TUBOS HELICOIDAIS INDÚSTRIA E SERVIÇOS LTDA, 65095-460 Brasil São Luís - MA (BR)
(72) Inventor: OLIVEIRA, Ene Pires de, 65010-000 St. Louis - MA (BR); PEREIRA, Ricardo Miguel Leitão, 65110-000 São José de Ribamar - MA (BR)
(74) Representative: do Nascimento Gomes, Rui
(86) International application number: PCT/BR2021/050163
(87) International publication number: WO 2022/221929

(56) References cited:
- EP-B1- 1 812 192
- WO-A1-2012/082475
- WO-A2-2009/075525
- WO-A2-2009/075525
- BR-A2- PI0 802 712
- BR-A2- PI0 802 712
- CN-A- 108 620 448
- ES-A1- 390 215
- GB-A- 923 866
- KR-A- 20100 046 512
- US-A- 4 081 981
- US-A- 6 000 261
- US-A- 6 000 261
- US-A1- 2006 156 775
- US-B2- 7 012 217

## Description

### INTRODUCTION

This patent refers to a mobile factory that is mounted on a truck, raft or container-type structure, which comprises all the equipment and tools necessary for the manufacture of helical pipes, whose distinguishing feature is its increase in production speed, resulting principally from gains in the movement of the coil, the preparation of the edges of the sheet used and in the welding to obtain the pipe.

### FIELD OF THE INVENTION

The invention in question is used in the field of heavy mechanics, more specifically in means for manufacturing steel sheet coil pipes with helical stitching *in loco.*

### DESCRIPTION

The production of pipes with helical seams dates back to the middle of the early 20^{th} century, and is one of the forms most commonly used today by the pipe manufacturing industry, in adductors, metal liners, oil and gas transportation, among others. The use of helical stitching in production brings advantages such as a reduction in costs by using the equipment to manufacture pipes with different diameters, savings in the reduction of the factory layout and mechanical performance equal to or better than other types of stitching.

Normally, pipe production takes place at fixed industrial plants. Thus, the process is limited by the length of the pipes, either due to the process of storage or handling. When they measure over 30 meters, they become unviable in terms of movement and transportation logistics, since they require special authorizations, according to RESOLUTION No. 1, OF JANUARY 6TH 2020, DNIT.

In this context, new technologies that allow for improvements in logistical activity regarding the supply of pipes to a site and increased productivity are welcome in the field in question.

### STATE OF THE ART

The current state of the art includes patent document PI 0802712-9 A2 entitled 'MOBILE SHEET HELICAL PIPE FACTORY" - which refers to a factory, composed of: an unwinder; a puller assembly; press; side guide rollers; calander; welding machine assembly; electrical supply source; and other means necessary for manufacturing steel sheet helical pipes: it is mobile and mounted on a low trailer of a mobile assembly of a tractor-truck, such that said mobile factory can be moved to the construction site where the pipe will be used and manufacture it "in loco", directly at the specified length, without the need for seams, and where the roller bed is a dismountable structure that can be transported, together with other equipment, tools and materials, by auxiliary trucks, which also form part of the factory; said roller bed being mounted orthogonally on the trailer at the exit of the calander.

The factory foreseen in the document above provides significant improvements in cost reduction, which include improved mechanical performance, as it significantly reduces the number of seams in the pipes; manufacture of pipes in remote locations and many places with poor accessibility; and pipes of greater than average lengths manufactured at fixed plants. However, the principal problem encountered in the above solution is the productivity of the process which is restricted to the thickness of the sheet to be welded; the lack of bevels on the sheets; the welding speed range that depends on factors such as sheet thickness; the welding energy used and the amount of welding wire, limited to one wire; and the time taken by the crane to move the coil.

### OBJECTVES OF THE INVENTION

This invention seeks to provide a steel sheet coil helical pipe factory which, in addition to being mounted on a low trailer, can be mounted on a raft and container-type structure;
This invention seeks to provide a steel sheet coil helical pipe factory with higher manufacturing speed and thus, increased productive;
This invention seeks to provide a steel sheet coil helical pipe factory capable of producing pipes of any length, like stationary factories, *in loco,* that is, on site and of the same quality, thus reducing problems related to design and logistics;
This invention seeks to provide a steel sheet coil helical pipe factory capable of centering the joints of the sheet to improve the welding of the top, thanks to the beveler that creates a chamfer on the sides of said sheet, thereby increasing the speed of the welding. The absence of the bevel can cause problems of lack of fusion, or inefficient fusion, or fusion only on one side of the joint;
This invention seeks to provide a steel sheet coil helical pipe factory which, by beveling the sides of the sheet, also allows for complete penetration of the weld into the sheet joints at greater thicknesses and with a smaller number of passes, in addition to using a lower/or equal amount of energy;
This invention seeks to provide a steel sheet coil helical pipe factory capable of increasing production speed through the use of multiple welding wires to perform the stitching of the sheet in the form of a helical seam. The increase in production capacity is proportional to the amount of wire used, either in the internal or external welding, which can vary from two to five wires per weld;
This invention seeks to provide a steel sheet coil helical pipe factory equipped with an optional coil driver, applicable only to the thicker steel sheet coils that reduce the change time of this resource, without the need for external media, thus increasing the productivity of the factory;
This invention seeks to provide a steel sheet coil helical pipe factory with additional presses and pullers, one being additional, which serve to work thicker sheets without reducing speed, as well as guide tables;
This invention seeks to provide a steel sheet coil helical pipe factory with a great cost-benefit ratio.

### SUMMARY OF THE INVENTION

The invention, which is defined in claim 1, is a factory for producing helical pipes by welding on steel sheets, mounted on trailers, rafts and container-type structures, whose primary advantage is its production speed, independently of the thickness of the steel sheet, resulting from the action of a beveler, with a variable angle, which on milling the sides thereof favors the joint / welding of the top, the use of two to five welding wires in the internal and external seam, and provides speed in the movement of the coils thanks to a coil driver used on thicker steel sheets.

### DESCRIPTION OF THE FIGURES

The invention is described below in its form of embodiment, and, for improved comprehension reference is made to the attached drawings, which represent:

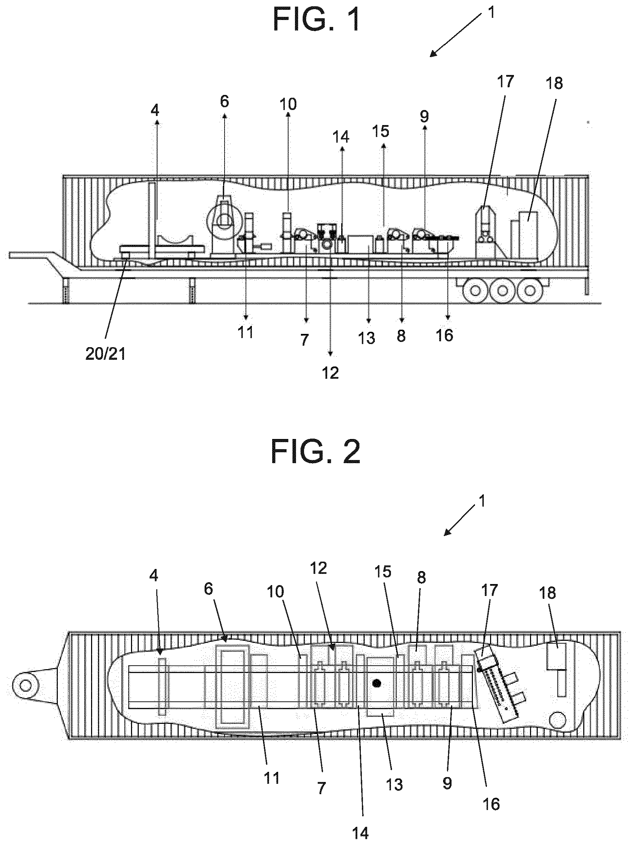

**FIGURE 1****:** Schematic side view of the mobile factory of helical pipe mounted on a trailer;
**FIGURE 2****:** Upper view of the beveler of the mobile factory of helical pipe mounted on a trailer;

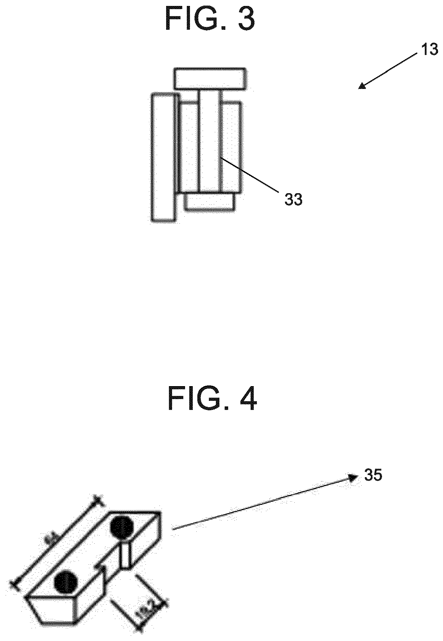

**FIGURE 3****:** Upper view of the beveler of the mobile factory of helical pipe;
**FIGURE 4****:** Side view of the beveler of the mobile factory of helical pipe, with detail of the cutting element;

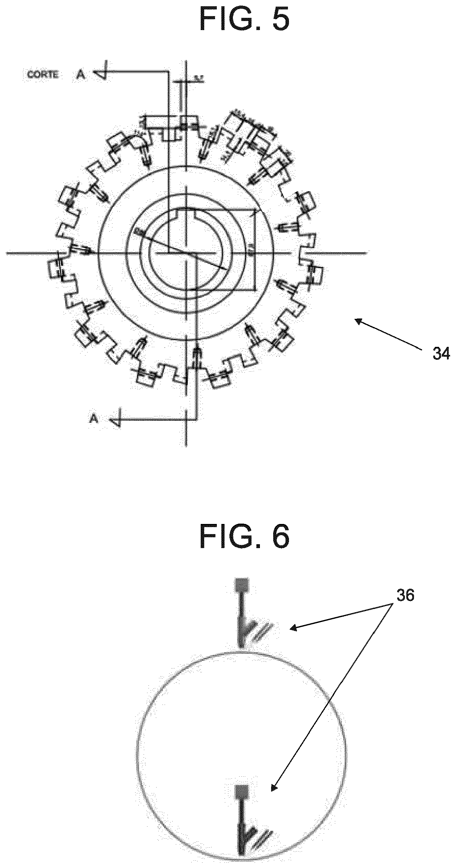

**FIGURE 5****:** Side view of the welding assembly of the mobile factory of helical pipe, with detail of the cutting element, with two welding wires;
**FIGURE 6****:** Side view of the welding assembly of the mobile factory of helical pipe mounted on a trailer, with three welding wires;

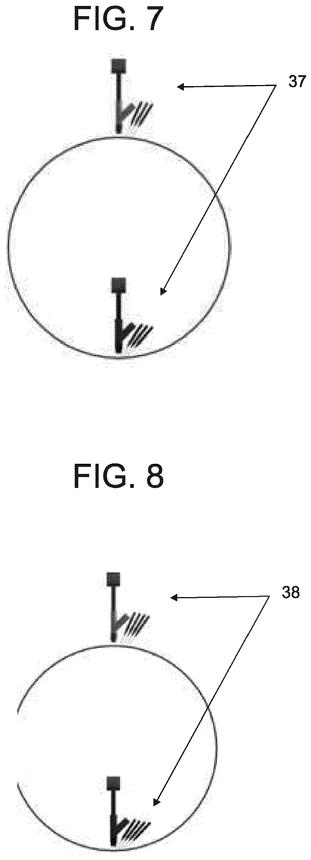

**FIGURE 7****:** Side view of the welding assembly of the mobile factory of helical pipe, with four welding wires;
**FIGURE 8****:** Side view of the welding assembly of the mobile factory of helical pipe, with five welding wires;

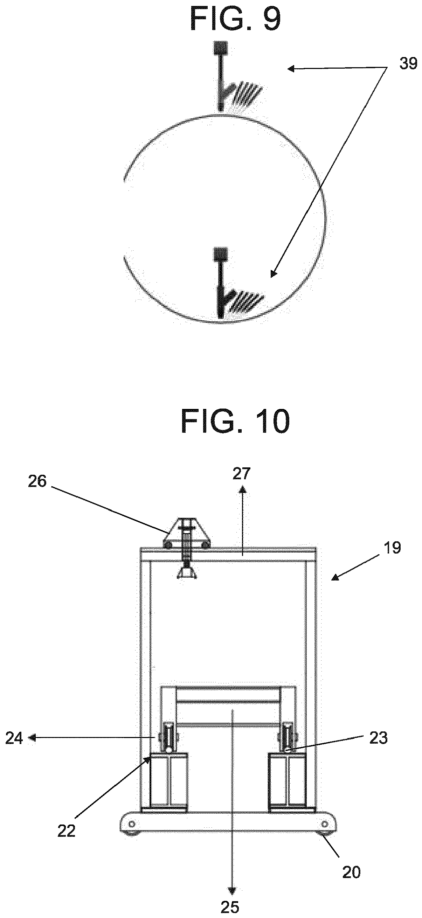

**FIGURE 9****:** Front view of the coil driver of the mobile factory of helical pipe;
**FIGURE 10****:** Side view of the coil driver of the mobile factory of helical pipe;

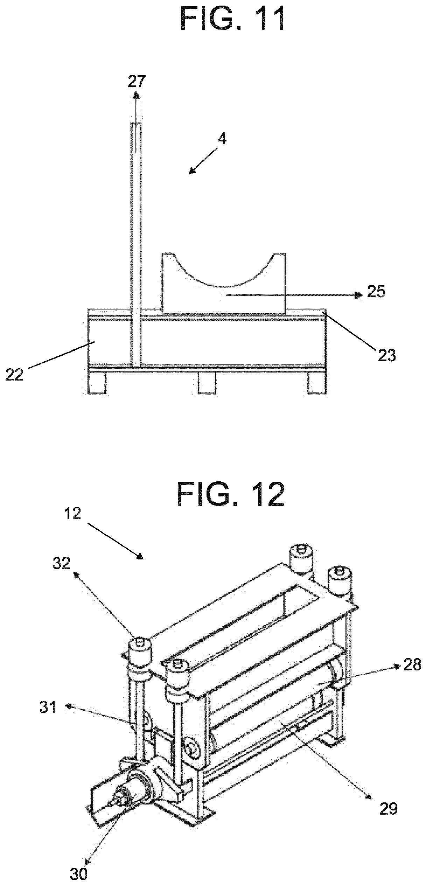

**FIGURE 11****:** Perspective view of the steel sheet straightener of the mobile factory of helical pipe;
**FIGURE 12****:** Schematic side view of the mobile factory of helical pipe mounted on a raft;

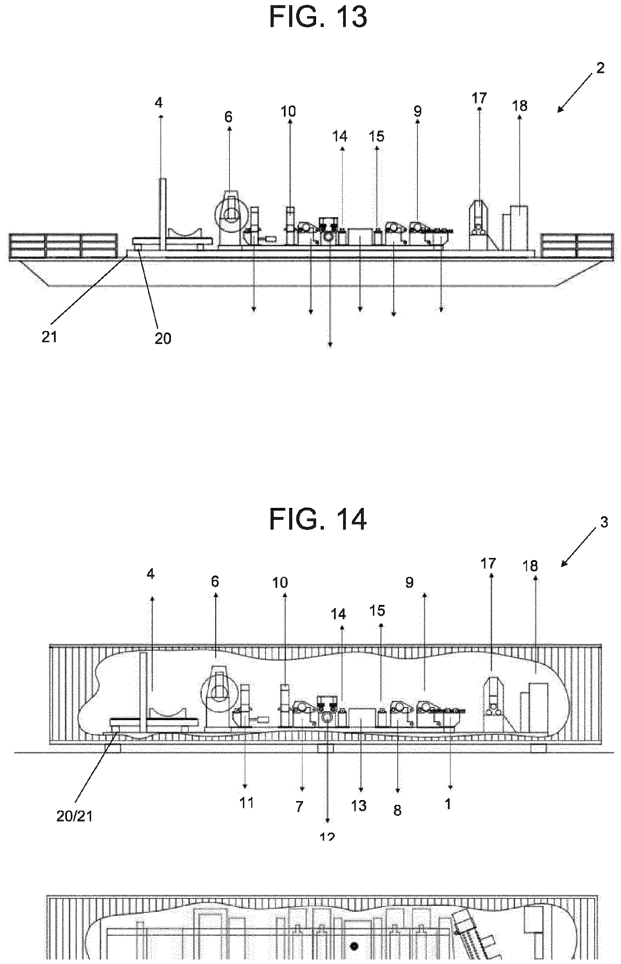

**FIGURE 13****:** Schematic top view of the mobile factory of helical pipe mounted on a raft;
**FIGURE 14****:** Schematic side view of the mobile factory of helical pipe mounted on a container-like structure;

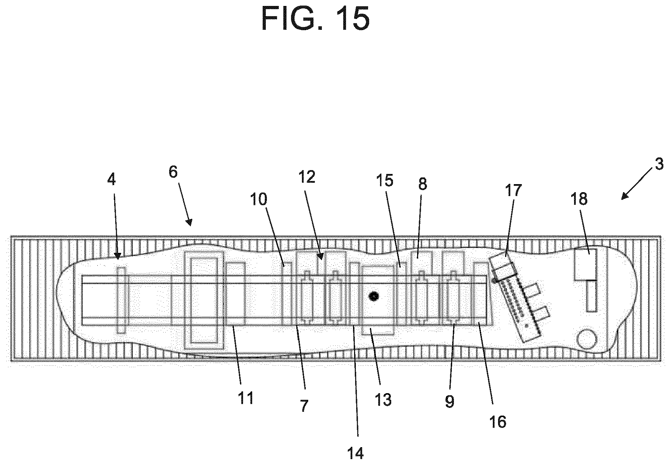

**FIGURE 15****:** Upper schematic view of the mobile factory of helical pipe mounted on a container-like structure.

### DETAILED TECHNICAL DESCRIPTION OF THE INVENTION

**MOBILE FACTORY OF STEEL SHEET COIL HELICAL PIPE,** consisting of a factory for the production of helical pipes that can be mounted on trailers (1), rafts (2), container-like structures (3) which is distinguished by its high production speed and the use of steel sheet coils of up to 1" and the use of an optional coil driver (4), a beveler (13) and a wire welding system (18) that may contain two (36), three (37), four (38) or five (39) welding wires per pass (internal and external).

More specifically, the invention concerns a factory for the production of helical pipes using steel sheet coils, preferably from %" to 1" in thickness, which is mobile since it is mounted on a low trailer (1), raft (2) or container-type structure (3), all autonomous and with sufficient electrical energy to drive the equipment necessary to transform a sheet strip into a helicoidal pipe at substantial speed, which results in a more productive factory model. The factory (1, 2, 3) for the production of helical pipes comprises an optional coil driver (4), used to speed up the changing and replacement of coils, since it enables the independent movement of the external support duly positioned in the region of the unwinder (6) where the steel sheet is moved by a set of at least three pullers (7, 8, 9) strategically positioned along the production line. Due to the fact that it operates with steel sheet coils of greater thicknesses and considering the need for increased production speed, it was necessary to add a press (10) to the existing press (11) and position them frontally, and to reposition the pullers (7, 8) located between the new steel sheet straightener (12), the beveler (13), lined by the guide tables (14, 15), this guide table (15) being followed by the optional supplementary puller (9) and another guide table (16) preceding the calander (17) and the welding machine (18). The optional coil driver (4), responsible for the swift placement of the coil in the unwinder (6), is positioned at the front of the trailer (1), raft (2) or container-type structure (3) and comprises a gantry (19) with casters (20) which, supported on rails (21) located on the factory floor (1, 2, 3), allows it to move towards the unwinder (6), where, at the base of said grantry (19) are elevated tracks (22) whose rails (23) traversed by rollers (24) allow for the sliding of the cradle (25) that receives the coil, which is moved by means of a hydraulic cart (26) located on the cross-beam (27). Positioned in the coil on the unwinder (6), the pullers (7, 8, 9) enter into action moving the steel sheet along the production line through the facing presses (10, 11) and the steel sheet straightener (12) where upper cylinders (28) parallel to lower cylinders (29), duly driven by electric motors (30), capable of adjustment by means of unwinders (31) with regulating locks (32), ready the steel sheet to enter the beveler (13), where the side edges are submitted to chamfers ranging between 15° and 30°, allowing for complete penetration of the weld into the joints of steel sheets with thicknesses of up to 1" and with fewer passes. The beveler (13) encompasses the two side edges of the sheet and comprises an electric motor (33) that drives the milling cutter (34) whose cutting inserts (35) are adjusted to angles of between 15° and 30°. The sheet, subjected to all the aforementioned procedural steps, maintains an alignment due to the action of the guide tables (14, 15, 16) proceeding to the calander (17) where the approximate sides take the form of a helical pipe for subsequent submission to the process of welding in the welding machine (18) where a wire welding system may contain two (36), three (37), four (38) or five (3 9) welding wires per pass (internal and external), either in the tandem-arc configuration (a welding source for each wire) and/or twin-arc (single welding power supply) and/or mixed (tandem-arc + twin-arc), where the choice of the system will depend on the parameters to be used.

## Claims

1. **MOBILE FACTORY OF STEEL SHEET COIL HELICAL PIPE** for obtaining a helical pipe from steel sheet coils, said mobile factory comprising an equipment mounted on an autonomous low trailer (1), raft (2) or container-type structure (3); said equipment defining a production line comprising the following consecutively positioned elements:
- an unwinder (6) adapted to receive a steel sheet coil;
- at least one press (11);
- a first and a second drive puller (7, 8) adapted to move the steel sheet along the production line, with the aid of guide tables (14, 15, 16);
- a calander (17);
- a welding machine (18) comprising a wire welding system;
the trailer (1), raft (2) or container-type structure (3) being adapted to provide energy supply to the equipment;
said equipment being **characterized by** further comprising:
- a steel sheet straightener (12), followed by
- a beveler (13) configured to make chamfers ranging from 15° to 30° on side edges of the steel sheet;
said steel sheet straightener (12) and beveler (13) being positioned proceeding the calander (17) and the welding machine (18).

2. **MOBILE FACTORY OF STEEL SHEET COIL HELICAL PIPE,** according to claim 1, wherein the wire welding system of the welding machine (18) contains two (36), three (37), four (38) or five (39) welding wires per pass.

3. **MOBILE FACTORY OF STEEL SHEET COIL HELICAL PIPE,** according to claims 1 or 2, wherein the equipment further includes:
- a coil driver (4);
said coil driver (4) being the first element of the production line and being adapted to position the steel sheet coil on the unwinder (6).

4. **MOBILE FACTORY OF STEEL SHEET COIL HELICAL PIPE,** according to claim 3, wherein the coil driver (4) comprises a gantry (19) with casters (20) which, supported on rails (21) located on the trailer (1), raft (2) or container-type structure (3), are arranged to enable the movement of the coil driver (4) in the direction of the unwinder (6); and wherein
at the base of the gantry (19) are elevated tracks (22) whose rails (23) traversed by rollers (24) allow for the sliding of a cradle (25) adapted to receive the steel sheet coil, which is moved by means of a hydraulic cart (26) located on a cross-beam (27).

5. **MOBILE FACTORY OF STEEL SHEET COIL HELICAL PIPE,** according to claim 1, wherein the equipment further comprises a third drive puller (9), positioned between the second drive puller (8) and a guide table (16) preceding the calander (17).

6. **MOBILE FACTORY OF STEEL SHEET COIL HELICAL PIPE,** according to claim 1, wherein the equipment further comprises two presses (10, 11), .

7. **MOBILE FACTORY OF STEEL SHEET COIL HELICAL PIPE,** according to claim 1, wherein the straightener (12) comprises upper cylinders (28) parallel to lower cylinders (29), duly driven by electric motors (30), adapted to provide adjustment of the steel sheet by means of spindles (31) with regulating locks (32).

8. **MOBILE FACTORY OF STEEL SHEET COIL HELICAL PIPE,** according to claim 1, wherein the beveler (13) is adapted to encompass two side edges of the steel sheet, and comprises an electric motor (33) configured to drive a milling cutter (34) whose cutting inserts (35) are adjusted to angles of between 15° and 30°.

## Patentansprüche

1. **MOBILE FABRIK FÜR STAHLBLECHCOIL-WENDELROHRE** zur Herstellung eines Wendelrohrs aus Stahlblechcoils, wobei die mobile Fabrik eine Ausrüstung umfasst, die auf einem autonomen niedrigen Anhänger (1), einem Floß (2) oder einer containerartigen Struktur (3) montiert ist; wobei die Ausrüstung eine Produktionslinie definiert, die die folgenden aufeinanderfolgend angeordneten Elemente umfasst:
- eine Abwickler (6) zur Aufnahme einer Stahlblechcoil;
- mindestens eine Presse (11);
- einem ersten und einem zweiten Antriebsabzieher (7, 8), die dazu geeignet sind, das Stahlblechcoil mit Hilfe von Führungstischen (14, 15, 16) entlang der Produktionslinie zu bewegen;
- einen Kalander (17);
- eine Schweißmaschine (18) mit einem Drahtschweißsystem;
der Anhänger (1), das Floß (2) oder der containerartigen Struktur (3) ist geeignet, die Energieversorgung der Ausrüstung zu gewährleisten;
wobei die Ausrüstung **dadurch gekennzeichnet ist, dass** sie außerdem umfasst:
- eine Richtmaschine (12) für Stahlblechcoils, gefolgt von
- eine Abschrägungsvorrichtung (13), die so konfiguriert ist, dass sie an den Seitenkanten des Stahlblechs Abschrägungen im Bereich von 15° bis 30° anbringt;
wobei die Richtmaschine (12) für Stahlblechcoils und Abschrägungsvorrichtung (13) vor dem Kalander (17) und der Schweißmaschine (18) angeordnet sind.

2. **MOBILE FABRIK FÜR STAHLBLECHCOIL-WENDELROHRE** nach Anspruch 1, wobei das Drahtschweißsystem der Schweißmaschine (18) zwei (36), drei (37), vier (38) oder fünf (39) Schweißdrähte pro Durchgang enthält.

3. **MOBILE FABRIK FÜR STAHLBLECHCOIL-WENDELROHRE** nach Anspruch 1 oder 2, wobei die Ausrüstung weiterhin umfasst:
- einen Coiltreiber (4);
wobei der Coiltreiber (4) das erste Element der Produktionslinie ist und dazu dient, die Stahlblechcoil auf dem Abwickler (6) zu positionieren.

4. **MOBILE FABRIK FÜR STAHLBLECHCOIL-WENDELROHRE** nach Anspruch 3, wobei der Coiltreiber (4) ein Portal (19) mit Laufrollen (20) umfasst, die, gestützt auf Schienen (21), die sich auf dem Anhänger (1), dem Floß (2) oder der containerartigen Struktur (3) befinden, so angeordnet sind, dass sie die Bewegung des Coiltreibers (4) in Richtung des Abwicklers (6) ermöglichen; und wobei
an der Basis des Portals (19) befinden sich erhöhte Gleise (22), deren von Rollen (24) durchzogene Schienen (23) das Gleiten einer Wiege (25) ermöglichen, die für die Aufnahme des Stahlblechcoils geeignet ist und mittels eines hydraulischen Wagens (26), der sich auf einem Querträger (27) befindet, bewegt wird.

5. **MOBILE FABRIK FÜR STAHLBLECHCOIL-WENDELROHRE** nach Anspruch 1, wobei die Ausrüstung außerdem einen dritten Antriebsabzieher (9) umfasst, die zwischen dem zweiten Antriebsabzieher (8) und einem dem Kalander (17) vorgeschalteten Führungstisch (16) angeordnet ist.

6. **MOBILE FABRIK FÜR STAHLBLECHCOIL-WENDELROHRE** nach Anspruch 1, wobei die Ausrüstung weiterhin zwei Pressen (10, 11) umfasst.

7. **MOBILE FABRIK FÜR STAHLBLECHCOIL-WENDELROHRE** nach Anspruch 1, wobei die Richtmaschine (12) obere Zylinder (28) umfasst, die parallel zu unteren Zylindern (29) angeordnet sind, die von Elektromotoren (30) angetrieben werden und die geeignet sind, die Einstellung des Stahlblechs mittels Spindeln (31) mit Stellschlössern (32) zu gewährleisten.

8. **MOBILE FABRIK FÜR STAHLBLECHCOIL-WENDELROHRE** nach Anspruch 1, wobei die Abschrägungsvorrichtung (13) so ausgebildet ist, dass sie zwei Seitenkanten des Stahlblechs umschließt und einen Elektromotor (33) unfasst, der so konfiguriert ist, dass er einen Fräser (34) antreibt, dessen Schneideinsätze (35) auf Winkel zwischen 15° und 30° eingestellt sind.

## Revendications

1. **USINE MOBILE DE TUBE HÉLICOÏDAL À PARTIR D'UNE BOBINE DE TÔLE D'ACIER** pour l'obtention d'un tube hélicoïdal à partir de bobines de tôle d'acier, ladite usine mobile comprenant un équipement monté sur une remorque basse autonome (1), un ferry (2) ou une structure de type conteneur (3) ; ledit équipement définissant une ligne de production comprenant les éléments suivants positionnés consécutivement :
- un dérouleur (6) adapté pour recevoir une bobine de tôle d'acier ;
- au moins une presse (11) ;
- un premier et un deuxième élément de traction (7, 8) adaptés pour déplacer la bobine de tôle d'acier le long de la ligne de production, à l'aide de tables de guidage (14, 15, 16) ;
- une calandre (17) ;
- une machine à souder (18) comprenant un système de soudage par fil ;
la remorque (1), le ferry (2) ou la structure de type conteneur (3) étant adaptés pour fournir de l'énergie à l'équipement ;
ledit équipement étant **caractérisé en ce qu'**il comprend en outre :
- une redresseuse de bobines de tôles d'acier (12), suivi par
- une biseauteuse (13) configurée pour réaliser des chanfreins allant de 15° à 30° sur les bords latéraux de la tôle d'acier ;
ladite redresseuse de tôles d'acier (12) et ladite biseauteuse (13) étant positionnées avant la calandre (17) et la machine à souder (18).

2. **USINE MOBILE DE TUBE HÉLICOÏDAL À PARTIR D'UNE BOBINE DE TÔLE D'ACIER,** selon la revendication 1, dans laquelle le système de soudage par fil de la machine à souder (18) contient deux (36), trois (37), quatre (38) ou cinq (39) fils de soudage par passe.

3. **USINE MOBILE DE TUBE HÉLICOÏDAL À PARTIR D'UNE BOBINE DE TÔLE D'ACIER,** selon les revendications 1 ou 2, dans laquelle l'équipement comprend en outre :
- un entraîneur de bobine (4) ;
ledit entraîneur de bobine (4) étant le premier élément de la ligne de production et étant adapté pour positionner la bobine de tôle d'acier sur le dérouleur (6).

4. **USINE MOBILE DE TUBE HÉLICOÏDAL À PARTIR D'UNE BOBINE DE TÔLE D'ACIER,** selon la revendication 3, dans laquelle l'entraîneur de bobine (4) comprend un portique (19) à roulettes (20) qui, appuyées sur des rails (21) situés sur la remorque (1), le ferry (2) ou la structure de type conteneur (3), sont agencées pour permettre le déplacement de l'entraîneur de bobine (4) en direction du dérouleur (6) ; et dans laquelle
à la base du portique (19) se trouvent des voies surélevées (22) dont les rails (23) traversés par des rouleaux (24) permettent le glissement d'un berceau (25) adapté pour recevoir la bobine de tôle d'acier, qui est déplacé au moyen d'un chariot hydraulique (26) situé sur une traverse (27).

5. **USINE MOBILE DE TUBE HÉLICOÏDAL À PARTIR D'UNE BOBINE DE TÔLE D'ACIER,** selon la revendication 1, dans laquelle l'équipement comprend en outre un troisième élément de traction (9), positionné entre le deuxième élément de traction (8) et une table de guidage (16) précédant la calandre (17).

6. **USINE MOBILE DE TUBE HÉLICOÏDAL À PARTIR D'UNE BOBINE DE TÔLE D'ACIER,** selon la revendication 1, dans laquelle l'équipement comprend en outre deux presses (10, 11).

7. **USINE MOBILE DE TUBE HÉLICOÏDAL À PARTIR D'UNE BOBINE DE TÔLE D'ACIER,** selon la revendication 1, dans laquelle la redresseuse (12) comprend des cylindres supérieurs (28) parallèles à des cylindres inférieurs (29), dûment entraînés par des moteurs électriques (30), adaptés pour assurer le réglage de la tôle d'acier au moyen de broches (31) munies de verrous de réglage (32).

8. **USINE MOBILE DE TUBE HÉLICOÏDAL À PARTIR D'UNE BOBINE DE TÔLE D'ACIER,** selon la revendication 1, dans laquelle la biseauteuse (13) est adaptée pour englober deux bords latéraux de la tôle d'acier, et comprend un moteur électrique (33) configuré pour entraîner une fraise (34) dont les plaquettes de coupe (35) sont réglées à des angles compris entre 15° and 30°.
